# EUROPÄISCHE PATENTSCHRIFT

(11) **EP 1 454 852 B1**
(45) Veröffentlichungstag und Bekanntmachung des Hinweises auf die Patenterteilung: **09.08.2006**
(21) Anmeldenummer: 04004939.7
(22) Anmeldetag: 03.03.2004
(51) Int. Cl.: B65G 47/58, B65G 17/12, B65G 17/36, B65G 17/48

(54) **Vorrichtung zum Transportieren von Tabakportionen**
Device for transporting portions of tobacco
Dispositif pour transporter des portions de tabac

(30) Priorität: 05.03.2003 DE 10309818
(43) Veröffentlichungstag der Anmeldung: 08.09.2004
(73) Patentinhaber: Focke & Co. (GmbH & Co. KG), 27283 Verden (DE)
(72) Erfinder: Focke, Heinz, 27283 Verden (DE); Renken, Jens, 21279 Hollenstedt (DE); Ehrhardt, Claus, 21075 Hamburg (DE)
(74) Vertreter: Bolte, Erich

(56) Entgegenhaltungen:
- EP-A- 0 246 420
- DE-C- 402 232
- GB-A- 638 723
- US-A- 4 583 571

## Beschreibung

Die Erfindung betrifft eine Vorrichtung zum Handhaben, insbesondere zum Transportieren von Gegenständen, Portionen von Schüttgütern oder Portionen faseriger Güter, wie geschnittenem Tabak, mit einem Förderer, insbesondere einem Endlosförderer, der mehrere Aufnahmen für Gegenstände oder Portionen aufweist, die in einer Entleerungsstation entleerbar sind, gemäß dem Oberbegriff des Anspruchs 1.

Eine derartige Vorrichtung ist beispielsweise aus der DE 402 232 C bekannt. An einem Förderer sind mehrere Aufnahmen aus paarweise angeordneten Bechern angeordnet, die gemeinsam gefördert, aber zum Entleeren jeder für sich gekippt werden können. Auch die Befüllung der beiden Becher erfolgt vorzugsweise an verschiedenen Stellen. Diese Lösung hat den Zweck verschiedene Stoffe in verschiedenen Mengen gleichzeitig und getrennt voneinander mit einer einzigen Fördervorrichtung zu fördern, sie aber an verschiedenen Stellen abladen zu können.

Die Erfindung erfasst den Transport von beliebigen stückigen, faserigen oder sonstigen Gütern, befasst sich aber vorrangig mit der Handhabung von abgemessenen bzw. gewogenen Portionen von geschnittenem Tabak. Der Endlosförderer ist bei diesem Anwendungsbereich eine Becherkette. Der Förderer besteht demnach aus einer (endlosen) Kette, an der einzelne, oben offenen Behälter - Becher - angebracht sind. Die Becher werden im Bereich einer vorzugsweise horizontalen Förderstrecke, nämlich einer Beschickungsstation, mit abgewogenen Portionen befüllt. Diese werden einer Entleerungsstation zugeführt und im Bereich derselben an einen Abförderer übergeben oder an eine Verpackungsmaschine, insbesondere an einen Beutelpacker.

Die Erfindung befasst sich mit Verbesserungen bei der Handhabung von insbesondere Tabakportionen.

Der Erfindung liegt die Aufgabe zugrunde, die eingangs genannte Vorrichtung dahingehend weiterzuentwickeln, dass bei geringem konstruktiven Aufwand eine deutliche Verbesserung der Leistungsfähigkeit erzielt wird.

Zur Lösung dieser Aufgabe ist die erfindungsgemäße Vorrichtung durch folgende Merkmale gekennzeichnet:
a) die mehreren, insbesondere zwei, Aufnahmen sind zu einer ausschließlich gemeinsam bewegbaren Einheit verbunden,
b) die Aufnahmen einer Einheit sind in einer Befüllungsstation gleichzeitig oder nacheinander befüllbar,
c) die Aufnahmen einer Einheit sind in der Entleerungsstation ausschließlich gemeinsam durch Kippen der Einheit gleichzeitig entleerbar,
d) die Aufnahmen einer Einheit sind relativ zum Förderer in einer Förderebene schwenkbar, derart, dass die Aufnahmen einer Einheit in der Füllstation in Förderrichtung und in der Entleerungsstation quer zur Förderrichtung nebeneinander positioniert sind.

Die Besonderheit liegt in der gleichzeitigen Entleerung von mindestens zwei Aufnahmen, also in der Übergabe von mindestens zwei Portionen an einen (doppelbahnigen) Abförderer oder an einen ebenfalls doppelbahnig arbeitenden Packer. Erfindungsgemäß sind die Einheiten mit vorzugsweise zwei Bechern relativ zum Förderer schwenkbar, nämlich in eine erste Stellung mit Ausrichtung der Becher in Förderrichtung aufeinander folgend. Diese Stellung der Einheiten ist zweckmäßigerweise für die Füllstation vorgesehen. Während des Transports werden die Einheiten geschwenkt, derart, dass die Aufnahmen bzw. Becher quer zum Förderer nebeneinander liegend positioniert sind. Im Bereich der Entleerungsstation wird die Einheit gekippt, insbesondere durch Umlenkung des Förderers, derart, dass die Aufnahmen bzw. Becher entleert werden.

Die Dreh- bzw. Schwenkbewegung der Einheit wird vorzugsweise ausschließlich mechanisch durchgeführt, nämlich durch Eingriff eines Führungsorgans an der Einheit in eine im Bewegungsbereich angeordnete Führungsbahn. Diese ist zweckmäßigerweise als in Bewegungsrichtung der Becher bzw. Einheiten verlaufende schlitzförmige Kulisse ausgebildet. Der Schwenkvorgang findet im Bereich einer Förderstrecke des Endlosförderers statt, insbesondere in einem schräg ansteigenden Abschnitt des Endlosförderers. Die gegenläufige Schwenkbewegung in die Ausgangsstellung der Aufnahmen bzw. Becher nebeneinander wird an der Unterseite, also im Bereich eines Rücklauftrums des Endlosförderers durchgeführt.

Weitere Merkmale und Besonderheiten der Erfindung werden nachfolgend anhand der Zeichnungen näher erläutert. Es zeigt:

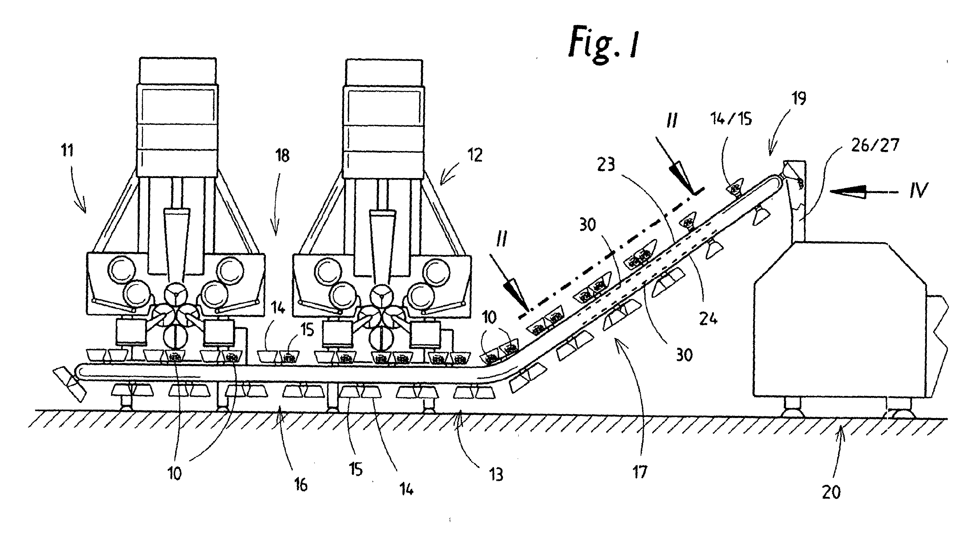

- Fig. 1: eine Einrichtung zum Fördern und Handhaben von Tabakportionen in schematischer Seitenansicht,

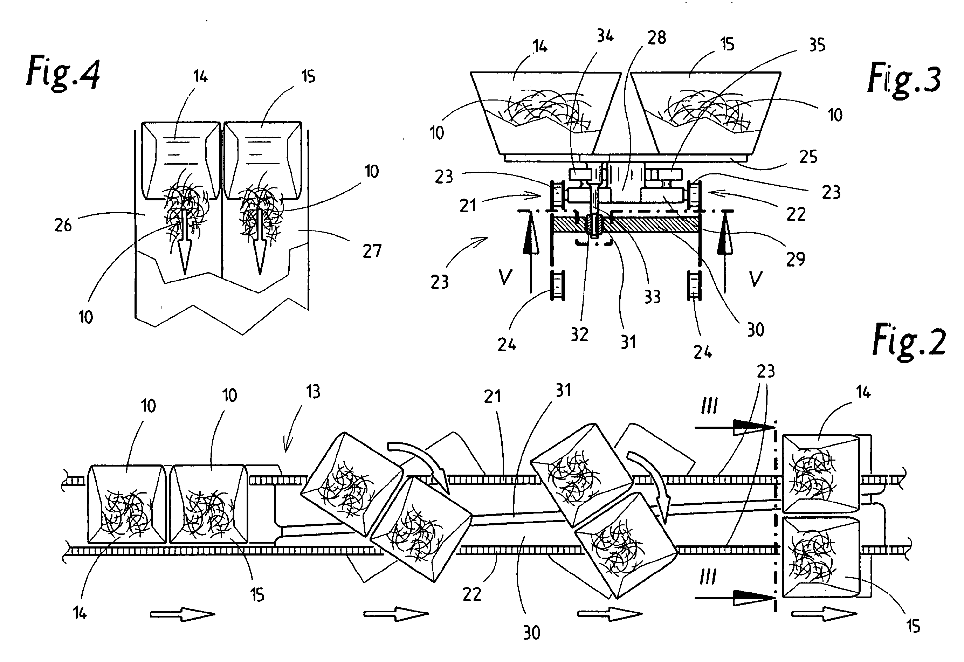

- Fig. 2: eine Einzelheit der Vorrichtung gemäß Fig. 1, nämlich einen Abschnitt eines Förderers in Draufsicht entsprechend Pfeil II-II in Fig. 1,
- Fig. 3: einen Querschnitt durch den Förderer in einer Schnittebene III-III der Fig. 2 in nochmals vergrößertem Maßstab,
- Fig. 4: zwei nebeneinanderliegende Becher in einer Entleerungs- bzw. Kippstellung entsprechend Pfeil IV in Fig. 1,
- Fig. 5: eine Unteransicht einer Einzelheit des Förderers in einer Ebene V-V der Fig. 3,
- Fig. 6: die Einzelheit gemäß Fig. 5 in einer veränderten Stellung.

Das Ausführungsbeispiel in den Zeichnungen ist auf den Transport bzw. die Handhabung von abgemessenen, nämlich gewogenen Portionen 10 aus geschnittenem Tabak ausgerichtet. Es geht um die Herstellung von Beutelpackungen mit Tabak. Die Portionen 10 werden in zwei nebeneinander angeordneten Wägeeinrichtungen, nämlich Tabakwaagen 11, 12 gebildet und einem Förderer 13 übergeben. Dieser ist mit Aufnahmen für je eine Portion 10 ausgerüstet, nämlich mit Bechern 14, 15, also oben offenen trichterförmig ausgebildeten Behältern. Der Förderer 13 bildet einen horizontalen Abschnitt 16 und einen anschließenden, schräggerichteten, aufwärts führenden zweiten Abschnitt 17. Die Tabakwaagen 11, 12 sind im Bereich des ersten, horizontalen Abschnitts 16 angeordnet, und zwar in Förderrichtung aufeinanderfolgend. Jede Tabakwaage 11, 12 beschickt einen Becher 14, 15 mit einer Portion 10. Der Abschnitt 16 bzw. die Tabakwaagen 11, 12 bilden eine Füllstation 18.

Die Portionen 10 werden durch den insbesondere taktweise angetriebenen Förderer 13 einer Entleerungsstation 19 zugeführt. Dort werden die Portionen 10 den Bechern 14, 15 entnommen und einer Weiterverarbeitung zugeführt. Bei dem gezeigten Ausführungsbeispiel werden die Portionen 10 von einem Beutelpacker 20 übernommen, der mit Tabak gefüllte Beutel herstellt.

Der Förderer 13 ist ein Endlosförderer und besteht bei diesem Ausführungsbeispiel aus zwei parallelen, endlosen Förderorganen, die als (endlose) Ketten 21, 22 ausgebildet sind. Die Ketten 21, 22 laufen parallel und mit Abstand voneinander unter Bildung eines oberen Fördertrums 23 und eines unteren Rücklauftrums 24. Die Becher 14, 15 sind mit den Ketten 21, 22 verbunden. Die Entleerung in der Entleerungsstation 19 erfolgt durch Kippen der Becher 14, 15 infolge Umlenkung der Ketten 21, 22 beim Übergang vom Fördertrum 23 in den Rücklauftrum 24. Die Becher 14, 15 werden so selbsttätig entleert.

Eine Besonderheit ist die Zusammenfassung von mehreren Bechern 14, 15 zu einer gemeinsam bewegbaren Einheit. Zwei Becher 14, 15 sind zu diesem Zweck auf einem gemeinsarnen Träger angeordnet, nämlich auf einer Traverse 25. Die aus den beiden Bechern 14, 15 und der Traverse 25 bestehende Einheit ist relativ zum Förderer 13 schwenkbar, und zwar um 90°. Im Bereich der Füllstation 18 sind die Becher 14, 15 in Förderrichtung aufeinanderfolgend ausgerichtet. Dadurch ist es möglich, die Becher 14, 15 aufeinanderfolgend in derselben Förderebene zu beladen. Im Bereich der Entleerungsstation 19 ist die Einheit verschwenkt, derart, dass die (zwei) Becher 14, 15 quer zur Bewegungsrichtung nebeneinander liegen und so gemeinsam entleert werden können. Es werden demnach gleichzeitig zwei Portionen 10 an einen zweibahnigen Abförderer oder an zwei Beutel des Beutelpackers 20 übergeben. Die Portionen 10 werden dabei an zwei Füllschächte 26, 27 übergeben bzw. in diese entleert, die im Bereich der Umlenkung des Förderers 13 nebeneinander angeordnet sind. Der Abstand der Füllschächte 26, 27 bzw. von Einfüllöffnungen derselben entspricht dem Abstand der Becher 14, 15 voneinander, so dass eine unmittelbare Übergabe der Portionen 10 durch Abwurf an die Füllschächte 26, 27 erfolgt. Diese führen die Portionen 10 vorzugsweise unmittelbar zu den offenen Beuteln.

Die Drehbewegung der Einheiten, nämlich der Traversen 25, wird im Bereich des schräggerichteten Abschnitts 17 des Förderers 13 durchgeführt, jedenfalls vor Erreichen der Entleerungsstation 19. Die Einheit bzw. die Traverse 25 ist zu diesem Zweck auf einem Drehzapfen 28 angeordnet, der mit einem Träger verbunden ist, nämlich mit einem Verbindungssteg 29, der die beiden Antriebsorgane, nämlich Ketten 21, 22 miteinander verbindet.

Die Dreh- bzw. Schwenkbewegung der Einheit wird selbsttätig, mechanisch durchgeführt, und zwar als Zwangsführung mittels Kulisse. Unterhalb des Fördertrums 23 ist ein plattenförmiges Führungsorgan 30 angeordnet, welches als Führungsmittel einen sich in Förderrichtung erstreckenden Führungsschlitz 31 aufweist. Mit dem Führungsorgan 30 arbeitet ein an der Einheit, nämlich an der Traverse 25, angebrachtes Führungselement zusammen. Es handelt sich dabei um eine Führungsrolle 32, die mit der Kulisse zusammenwirkt, nämlich während des Transports der Einheit im Bereich des Führungsorgans 30 in den Führungsschlitz 31 eintritt. Die Führungsrolle 32 ist an einem Tragzapfen 33 angebracht, der mit der Traverse 25 verbunden ist, und zwar versetzt zur Drehachse bzw. zum Drehzapfen 28. Die Relativstellung von Tragzapfen 33 bzw. Führungsrolle 32 in Bezug auf den Drehzapfen 28 ist so ausgerichtet, dass beim Transport der Einheiten die Führungsrolle 32 in den Führungsschlitz 31 eintritt. Bei fortgesetzter Bewegung wird die Einheit in einem Bereich von 90° geschwenkt, und zwar aufgrund der Form des Führungsschlitzes 31, der schräg, geradlinig von einem Eintrittsende zu einem Austrittsende für die Führungsrolle 32 verläuft. Die Einheit wird um eine gemeinsame Kippachse gekippt.

Nach Entleerung der Becher 14, 15 werden die Einheiten im Bereich des Rücklauftrums 24 durch ein entsprechend ausgebildetes Führungsorgan in die Ausgangsstellung zurückbewegt.

Die jeweiligen Endstellungen der Einheiten, nämlich Ausrichtung der Becher 14, 15 in Förderrichtung einerseits oder quer zur Förderrichtung andererseits, sind durch Anschläge bzw. Halteorgane fixiert. Bei dem vorliegenden Ausführungsbeispiel sind an der Traverse 25 (zwei) Halteorgane angebracht, nämlich Klammern 34, 35, die aus zwei schwenkbaren, elastischen bzw. durch Federn elastisch in Schließstellung beaufschlagten Klemmbacken bestehen. Die Klammern 34, 35 arbeiten mit dem Tragzapfen 33 zusammen. In den jeweiligen Endstellungen der Traverse 25 tritt der Tragzapfen 33 in die eine oder andere Klammer 34, 35 ein und bewirkt so eine stabile Stellung. Der Tragzapfen 33 wird jeweils durch die Zwangsführung in die Klammer 34, 35 eingeführt und durch die elastisch beaufschlagten Haltebacken fixiert. Bei Einleitung der Drehbewegung wird der Tragzapfen 33 ebenfalls durch die Zwangsführung aus der jeweiligen Klammer 34, 35 herausgedrückt, wobei jeweils die Klemmbacken gegen den Druck der Federn geöffnet werden. Die Klammern 34, 35 sind als Einheit schwenkbar an der Unterseite der Traversen 25 gelagert.

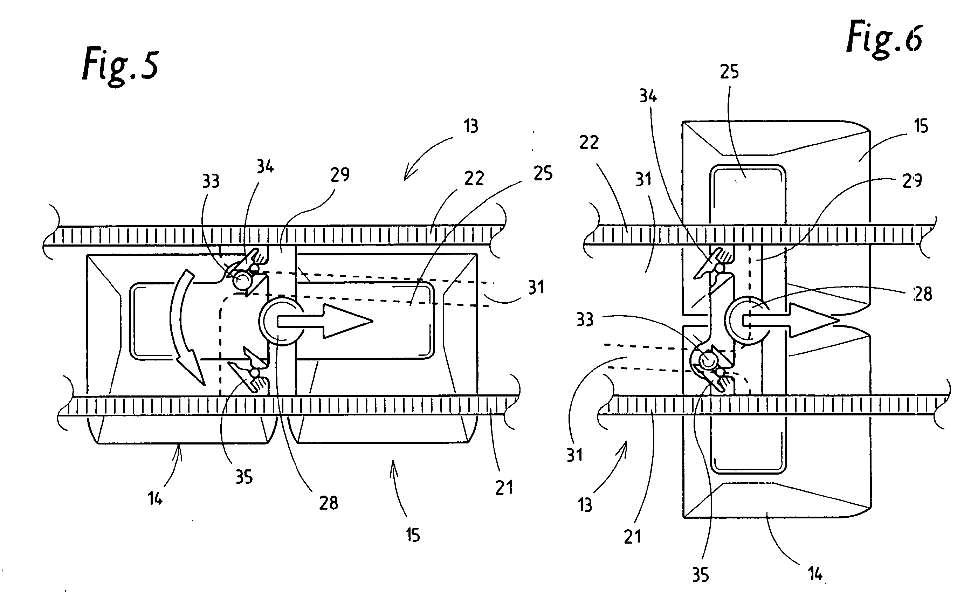

Die schwenkbare Anordnung der Klammern 34, 35 einerseits und die Zwangsführung des Tragzapfens 33 während der Förderbewegung andererseits bewirken, dass der Tragzapfen 33 bei Beginn einer Schwenkbewegung der Traverse 25 aus der jeweiligen Klammer 34, 35 herausbewegt wird (Fig. 5). Bei Erreichen der Endstellung der Schwenkbewegung tritt der Tragzapfen 33 zwangsläufig in die andere Klammer 34, 35 ein (Fig. 6).

Eine Besonderheit der Vorrichtung besteht darin, dass vorhandene Anlagen mit zwei Beschickungsorganen (Tabakwaagen) auf einfache Weise umgestellt werden können auf erhöhte Leistung durch gleichzeitiges Entleeren von zwei Bechern 14, 15.

### Bezuaszeichenliste:

- 10: Portion
- 11: Tabakwaage
- 12: Tabakwaage
- 13: Förderer
- 14: Becher
- 15: Becher
- 16: Abschnitt
- 17: Abschnitt
- 18: Füllstation
- 19: Entleerungsstation
- 20: Beutelpacker
- 21: Kette
- 22: Kette
- 23: Fördertrum
- 24: Rücklauftrum
- 25: Traverse
- 26: Füllschacht
- 27: Füllschacht
- 28: Drehzapfen
- 29: Verbindungssteg
- 30: Führungsorgan
- 31: Führungsschlitz
- 32: Führungsrolle
- 33: Tragzapfen
- 34: Klammer
- 35: Klammer

## Patentansprüche

1. Vorrichtung zum Handhaben, insbesondere zum Transportieren, von Gegenständen, Portionen (10) von Schüttgütern oder Portionen (10) von faserigen Gütern, wie geschnittenem Tabak, mit einem Förderer, insbesondere einem Endlosförderer, der mehrere Aufnahmen für Gegenstände oder Portionen (10) aufweist, die in einer Füllstation (18) befüllt und in einer Entleerungsstation (19) entleert werden, **gekennzeichnet durch** folgende Merkmale:
a) die mehreren, insbesondere zwei, Aufnahmen sind zu einer ausschließlich gemeinsam bewegbaren Einheit verbunden,
b) die Aufnahmen einer Einheit sind in der Füllstation (18) gleichzeitig oder nacheinander befüllbar,
c) die Aufnahmen einer Einheit sind in der Entleerungsstation (19) ausschließlich gemeinsam **durch** Kippen der Einheit gleichzeitig entleerbar,
d) die Aufnahmen einer Einheit sind relativ zum Förderer (13) in einer Förderebene schwenkbar, derart, dass die Aufnahmen einer Einheit in der Füllstation (18) in Förderrichtung und in der Entleerungsstation (19) quer zur Förderrichtung nebeneinander positioniert sind.

2. Vorrichtung nach Anspruch 1, **dadurch gekennzeichnet, dass** die Aufnahmen auf einem gemeinsamen, quer zum Förderer (13) angeordneten Träger gelagert sind, insbesondere auf einem zwei Einzelförderer, insbesondere Ketten (21, 22), miteinander verbindenden Steg (29), derart, dass bei Umlenkung des Förderers (13) bzw. der Ketten (21, 22) die Aufnahmen einer Einheit eine Kippbewegung um eine gemeinsame, quergerichtete Kippachse ausführen.

3. Vorrichtung nach Anspruch 1 oder 2, **dadurch gekennzeichnet, dass** die Aufnahmen als offene Behälter, insbesondere als Becher (14, 15) ausgebildet sind und dass vorzugsweise zwei Becher (14, 15) eine Einheit bilden.

4. Vorrichtung nach Anspruch 1 oder einem der weiteren Ansprüche, **dadurch gekennzeichnet, dass** die Aufnahmen bzw. Becher (14, 15) auf einem Tragstück gelagert sind, insbesondere auf einer Traverse (25), die drehbar mit dem Förderer (13), insbesondere dem Verbindungssteg (29) verbunden ist.

5. Vorrichtung nach Anspruch 4 oder einem der weiteren Ansprüche, **dadurch gekennzeichnet, dass** die Traverse (25) mit einem Drehzapfen (28) auf dem die beiden Ketten (21, 22) miteinander verbindenden Steg abgestützt ist.

6. Vorrichtung nach Anspruch 1 oder einem der weiteren Ansprüche, **dadurch gekennzeichnet, dass** die Einheiten während des Transports durch den Förderer (13) drehbar sind, insbesondere im Bereich eines schräg aufwärts gerichteten Abschnitts (16) vor der Entleerungsstation (19).

7. Vorrichtung nach Anspruch 1 oder einem der weiteren Ansprüche, **dadurch gekennzeichnet, dass** die Einheit aus Becher (14, 15) und Traverse (25) durch ein Führungsgetriebe zwangsweise schwenkbar ist, insbesondere durch Eintritt eines mit einer Einheit verbundenen Führungsstücks, insbesondere einer Führungsrolle (32), in einen Führungsschlitz (31) eines feststehenden Führungsorgans (30), wobei durch den Verlauf des Führungsschlitzes (31) während des Transports eine Einheit bzw. eine Traverse (25) um 90° verschwenkbar ist zwischen einer Ausrichtung in Förderrichtung einerseits und quer zur Förderrichtung andererseits.

8. Vorrichtung nach Anspruch 7 oder einem der weiteren Ansprüche, **dadurch gekennzeichnet, dass** das plattenförmige Führungsorgan (30) einen geradlinig, in Förderrichtung schräg verlaufenden Führungsschlitz (31) aufweist.

9. Vorrichtung nach Anspruch 1 oder einem der weiteren Ansprüche, **dadurch gekennzeichnet, dass** die Einheiten in den Endstellungen vorzugsweise lösbar fixiert sind, insbesondere durch an jeder Einheit angebrachte Klammern (34, 35), in die ein an der Einheit angebrachtes Organ in der jeweiligen Endstellung eintritt, insbesondere der Tragzapfen (33) für die Führungsrolle (32).

## Claims

1. Apparatus for handling, in particular for transporting, articles, portions (10) of bulk materials or portions (10) of fibrous materials, such as cut tobacco, having a conveyor, in particular an endless conveyor, which has a plurality of accommodating means for articles or portions (10), the accommodating means being filled in a filling station (18) and emptied in an emptying station (19), **characterized by** the following features:
a) the plurality of, in particular two, accommodating means are connected to form an exclusively jointly movable unit,
b) the accommodating means of a unit can be filled simultaneously or one after the other in the filling station (18),
c) the accommodating means of a unit can be emptied simultaneously, exclusively jointly, in the emptying station (19) by virtue of the unit being tilted,
d) the accommodating means of a unit can be pivoted in a conveying plane relative to the conveyor (13) such that the accommodating means of a unit are positioned in the conveying direction in the filling station (18) and one beside the other, in a direction transverse to the conveying direction, in the emptying station (19).

2. Apparatus according to Claim 1, **characterized in that** the accommodating means are mounted on a common carrier arranged transversely to the conveyor (13), in particular on a crosspiece (29) connecting two individual conveyors, in particular chains (21, 22), to one another, such that, upon deflection of the conveyor (13) or of the chains (21, 22), the accommodating means of a unit execute a tilting movement about a common, transversely directed tilting axis.

3. Apparatus according to Claim 1 or 2, **characterized in that** the accommodating means are designed as open containers, in particular as buckets (14, 15), and **in that** preferably two buckets (14, 15) form a unit.

4. Apparatus according to Claim 1 or one of the further claims, **characterized in that** the accommodating means or buckets (14, 15) are mounted on a carrying member, in particular on a crossmember (25), which is connected in a rotatable manner to the conveyor (13), in particular the connecting crosspiece (29).

5. Apparatus according to Claim 4 or one of the further claims, **characterized in that** the crossmember (25) is supported by way of a rotary pin (28) on the crosspiece connecting the two chains (21, 22) to one another.

6. Apparatus according to Claim 1 or one of the further claims, **characterized in that** the units can be rotated during transportation by way of the conveyor (13), in particular in the region of an obliquely upwardly directed section (16) upstream of the emptying station (19).

7. Apparatus according to Claim 1 or one of the further claims, **characterized in that** the unit comprising buckets (14, 15) and crossmember (25) can be forcibly pivoted by a guide mechanism, in particular by virtue of a guide member, in particular a guide roller (32), connected to a unit entering into a guide slot (31) of a fixed guide arrangement (30), it being possible, by virtue of the course taken by the guide slot (31), for a unit or a crossmember (25) to be pivoted, during transportation, through 90° between an orientation in the conveying direction, on the one hand, and in a direction transverse to the conveying direction, on the other hand.

8. Apparatus according to Claim 7 or one of the further claims, **characterized in that** the plate-like guide arrangement (30) has a guide slot (31) running rectilinearly and obliquely in the conveying direction.

9. Apparatus according to Claim 1 or one of the further claims, **characterized in that** the units are fixed in a preferably releasable manner in the end positions, in particular by clamps (34, 35) which are fitted on each unit and into which an element which is fitted on the unit, in particular the carrying pin (33) for the guide roller (32), enters in the respective end position.

## Revendications

1. Dispositif pour manipuler, en particulier pour transporter des objets, des portions (10) de produits en vrac ou des portions (10) de produits fibreux, comme du tabac coupé, avec une bande transporteuse, notamment une bande transporteuse sans fin, qui présente plusieurs logements pour des objets ou des portions (10) qui sont remplis dans un poste de remplissage (18) et vidés dans un poste de vidage (19), **caractérisé par** les caractéristiques suivantes :
a) les plusieurs, notamment deux, logements sont connectés à une unité déplaçable uniquement en commun,
b) les logements d'une unité peuvent être remplis dans le poste de remplissage (18) en même temps ou successivement,
c) les logements d'une unité peuvent être vidés simultanément dans le poste de vidage (19) exclusivement en commun par basculement de l'unité,
d) les logements d'une unité peuvent pivoter par rapport à la bande transporteuse (13) dans un plan de transport de telle sorte que les logements d'une unité dans le poste de remplissage (18) soient disposés les uns à côté des autres dans la direction de transport et dans le poste de vidage (19) soient disposés transversalement à la direction de transport.

2. Dispositif selon la revendication 1, **caractérisé en ce que** les logements sont montés sur un support commun disposé transversalement à la bande transporteuse (13), notamment sur une nervure (29) reliant entre elles deux bandes transporteuses individuelles, en particulier des chaînes (21, 22), de telle sorte que lors de la déviation de la bande transporteuse (13), respectivement des chaînes (21, 22), les logements d'une unité exécutent un mouvement de basculement autour d'un axe de basculement commun orienté transversalement.

3. Dispositif selon la revendication 1 ou 2, **caractérisé en ce que** les logements sont réalisés sous forme de récipients ouverts, notamment sous forme de coupes (14, 15), et **en ce que** de préférence deux coupes (14, 15) forment une unité.

4. Dispositif selon la revendication 1 ou l'une quelconque des autres revendications, **caractérisé en ce que** les logements ou les coupes (14, 15) sont montés sur une pièce de support, notamment sur une traverse (25), qui est connectée à rotation à la bande transporteuse (13), notamment à la nervure de connexion (29).

5. Dispositif selon la revendication 4 ou l'une quelconque des autres revendications, **caractérisé en ce que** la traverse (25) est supportée avec un tourillon (28) sur la nervure reliant l'une à l'autre les deux chaînes (21, 22).

6. Dispositif selon la revendication 1 ou l'une quelconque des autres revendications, **caractérisé en ce que** les unités peuvent tourner pendant le transport par la bande transporteuse (13), notamment dans la région d'une portion (16) orientée obliquement vers le haut avant le poste de vidage (19).

7. Dispositif selon la revendication 1 ou l'une quelconque des autres revendications, **caractérisé en ce que** l'unité constituée des coupes (14, 15) et de la traverse (25) peut pivoter de manière forcée par un mécanisme de guidage, notamment par l'entrée d'une pièce de guidage connectée à une unité, notamment d'une poulie de guidage (32), dans une fente de guidage (31) d'un organe de guidage fixe (30), une unité ou une traverse (25) pouvant pivoter de 90° pendant le transport sur le passage de la fente de guidage (31), entre une orientation dans la direction de transport d'une part et transversalement à la direction de transport d'autre part.

8. Dispositif selon la revendication 7, ou l'une quelconque des autres revendications, **caractérisé en ce que** l'organe de guidage (30) en forme de plaque présente une fente de guidage rectiligne (31), s'étendant obliquement dans la direction de transport.

9. Dispositif selon la revendication 1 ou l'une quelconque des autres revendications, **caractérisé en ce que** les unités sont fixées de préférence de manière desserrable dans les positions d'extrémité par des pinces (34, 35) montées sur chaque unité, dans lesquelles entre dans la position d'extrémité respective un organe monté sur l'unité, notamment le tourillon de support (33) pour la poulie de guidage (32).
